Europäisches Patentamt

**European Patent Office**

Office européen des brevets

(11) Publication number: **0 077 206**
A1

## (12) EUROPEAN PATENT APPLICATION

(21) Application number: 82305401.0

(22) Date of filing: 11.10.82

(51) Int. Cl.³: **F 16 D 66/02**

(30) Priority: 12.10.81 GB 8130725

(43) Date of publication of application: 20.04.83
Bulletin 83/16

(84) Designated Contracting States: **AT BE CH DE FR GB IT LI LU NL SE**

(71) Applicant: **MORGANITE ELECTRICAL CARBON LIMITED, Clase Road Morriston, Swansea Glamorgan SA6 8PP Wales (GB)**

(72) Inventor: **Cheesmore, Royston Amos, Deceased (GB)**

(74) Representative: Weston, Walter et al, **PHILLIPS & LEIGH 7 Staple Inn Holborn, London WC1V 7QF (GB)**

(54) **Wear sensor and method of making same.**

(57)     A wear sensor comprises a body (1, 6) having a U-shaped slot (2, 7) filled with graphite-containing resistor material which holds terminal pins (5, 8) in the arms of the U-shaped slot (2, 7). Wear of the sensor reduces the cross-section of the resistor (10, 11) formed by the base of the U-shaped slot (2, 7); and the resulting increase in resistance of the resistor (10, 11) can be used as an indication of the degree of wear of the sensor.

EP 0 077 206 A1

WEAR SENSOR AND METHOD OF MAKING SAME

This invention relates to wear sensors for wear indicators, and in particular, but not exclusively, to wear indicators for brake pads for automobiles.

Conventional brake pads have a layer of friction material carried on a support and shaped to conform to a braking surface such as a brake disc or drum. In order to provide a warning when the layer of friction material is about to wear out it is known to incorporate a detector comprising a probe in the brake pad extending partially into the layer of friction material so that when the friction material has worn sufficiently the probe and the brake disc or drum will touch, so completing an electrical circuit which can be used to generate a warning signal.

It is also known (see U.K. published application No. 2 054 071) to provide a probe comprising an electrical contact assembly extending into the layer of friction material and having two terminal portions, insulated from each other, and a connecting portion located wholly within the layer of friction material.

Such an assembly can be used to provide two signals, one when the connecting portion makes contact with the brake disc or drum, and a second signal when the connection portion is sufficiently worn away to break the electrical connection between the two terminal portions.

The present invention provides an electrical sensor for wear of a member subject to abrasion, the sensor comprising terminals for an electrical indicating circuit, and a sensing component to be subject to wear, the sensing component comprising a resistor the resistance of which varies with wear so that wear-resultant variation in the resistance of the resistor can be used by the indicating circuit to provide a scalar indication of the degree of wear of the sensing component, characterised in that the sensor comprises a holder body (1, 6) of high temperature-resistant plastics material having a U-shaped slot (2, 7) filled with graphite-containing resistor material constituting the sensing component (10, 11) so that the sensing component presents two arms extending into the holder body (1, 6), the terminals of the sensor comprising pins (5, 8) embedded in the resistor material of the arms of the sensing component.

A significant advantage of the present invention is that it provides a unitary wear sensor with good, firm electrical connection to an indicating circuit being provided by the pins embedded in the arms of the sensing component.  This rugged construction is particularly advantageous for such a device which is to be deliberately subject to wear.

A further advantage of the invention is that it provides an inexpensive and easily replaceable wear sensor unit.

An advantage of using a graphite-containing sensing component is that graphite materials can be moulded and pressed into shape and their resistivity can be varied by altering the temperature and pressure of moulding and pressing.

A further advantage of using a graphite-containing sensing component is that graphite can provide a lubricant for surfaces in contact and thus, in suitable cases, reduce electro-mechanical wear.

The invention is illustrated by way of example in the accompanying drawings, in which:-

Fig. 1 is a sectional view of a sensor in accordance with the invention,

Fig. 2 is a plan view of the sensor shown in Fig. 1,

Fig. 3 is a bottom plan view of the sensor shown in Figs. 1 and 2, and

Fig. 4 is a sectional view of an alternative sensor according to another embodiment of the invention.

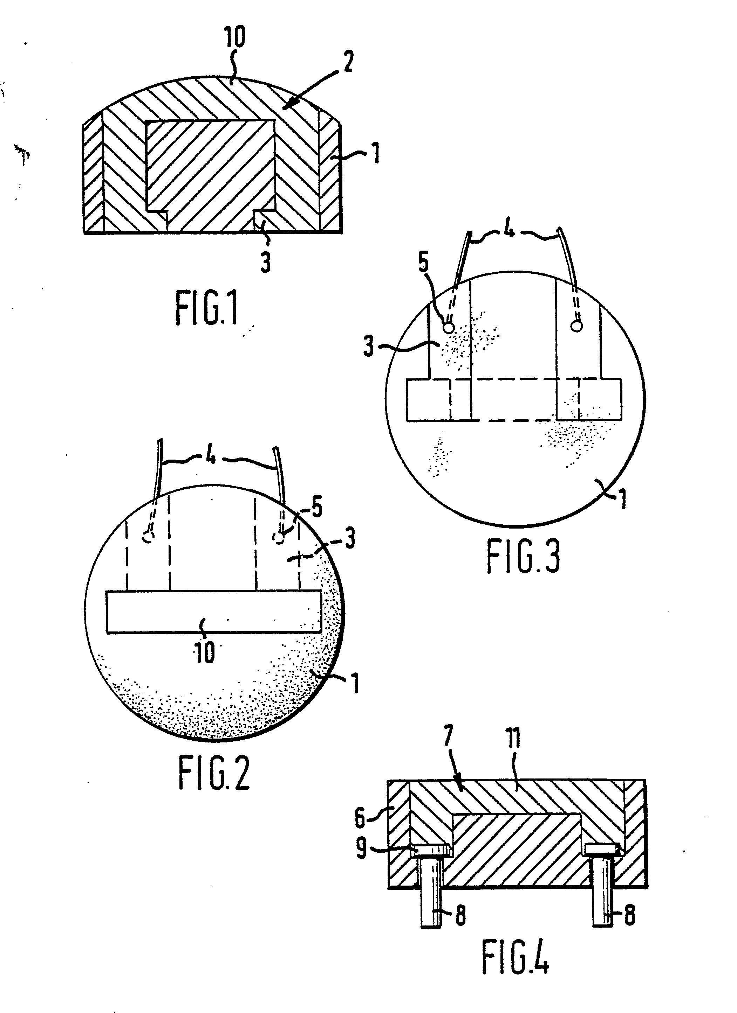

Figs. 1 to 3 show a sensor comprising a domed cylindrical holder 1 of high temperature-resistant plastics material, preferably stable at 300°C e.g. glass filled nylon polyimide, or asbestos filled polyimide (up to 400°C) which is formed to provide an inverted U-shaped slot 2 with terminal portions 3 on the free ends of its arms. Connecting wires 4 are soldered to terminal pins 5; the pins 5 and part of the connecting wires 4 being embedded in resistor material which fills the U-shaped slot 2 and the terminal portions 3, so as to constitute a resistor 10.

The resistor material is a graphite-based mixture which can be moulded into the holder 1 and cured at high temperature (e.g. 160°C) and under pressure of e.g. up to 125 $MNm^{-2}$. Variation of the moulding pressure and temperature allows the resistivity of the resistor material to be varied.

For a typical sensor as shown in Fig. 1, in which the internal width of the base of the U-shaped slot is approx. 2.3mm and the height of the arms of the U-shaped slot is approx. 3mm, and in which the overall cross-section of the U-shaped slot is approx. $2.5(mm)^2$, a suitable resistor material is a phenolic resin having 12-14% graphite. This gives a resistance of $\sim$500 ohms between the pins when moulded at a pressure of 30 $MNm^{-2}$ and a temperature of 165°C. Suitable resistor materials have been found to include phenolic resins filled with pulverised carbon or graphitised carbon up to a maximum of 30% by weight. The required resistance may be achieved by varying grain size, amount of carbon, moulding pressure and moulding temperature.

Graphite-based resistor materials also act as a lubricant in use and avoid damage to the brake disc or drum when used in an automotive braking system.

Fig. 4 shows an alternative sensor of simpler construction which comprises a cylindrical holder 6 of high temperature-resistant plastics material having a U-shaped slot 7, the arms of which are constricted at their free ends to retain pins 8, by their heads 9. The pins 8 can be soldered to connecting wires (not shown). The heads 9 of the pins are held in the resistor material which completely fills the remaining free space in the U-shaped slot and forms a resistor 11.

An alternative means of securing connecting wires to the sensor is to wind their ends around connector pins such as 8 and subsequently add the resistor material to surround and retain the wire ends and pins.

In use, both of the sensors of Figs. 1 and 4 require a simple indicating circuit to measure and display the resistance of the sensor, which is proportional to the degree of wear of the resistor 10 or 11.

In the use of both of the sensors shown the resistor material in the base of the U-shaped slot is worn in use and as its cross-section decreases the resistance between the pins increases. Simultaneously the resistance between either of the pins and the wearing surface of the resistor 10 or 11, decreases.

Either or both of these changes in resistance can be used to indicate the degree of wear and can be chosen to suit any particular application.

The sensor may be used to indicate the wear of an object either for a limited degree of wear, e.g. to measure the last 2mm of wear of a brake pad, or it can be used to indicate progressively the wear of an object over its entire thickness.

The sensors shown have two terminals but the invention is not restricted to this as it would be possible to have three or more terminals to allow uneven wear to be indicated by comprison of the resistances between different pairs of pins.

CLAIMS

1. An electrical sensor for wear of a member subject to abrasion, the sensor comprising terminals for an electrical indicating circuit, and a sensing component to be subject to wear, the sensing component comprising a resistor the resistance of which varies with wear so that wear-resultant variation in the resistance of the resistor can be used by the indicating circuit to provide a scalar indication of the degree of wear of the sensing component, characterised in that the sensor comprises a holder body (1, 6) of high temperature-resistant plastics material having a U-shaped slot (2, 7) filled with graphite-containing resistor material constituting the sensing component (10, 11) so that the sensing component presents two arms extending into the holder body (1, 6), the terminals of the sensor comprising pins (5, 8) embedded in the resistor material of the arms of the sensing component.

2. An electrical sensor for wear as claimed in claim 1 characterised in that connecting wires (4) attached to the pins are at least partly embedded in the resistor material.

3. An electrical sensor for wear as claimed in either preceding claim characterised in that the arms of the U-shaped slot are constricted at their free ends to retain the pins by integral heads (9) of the pins (8).

4. An electrical sensor for wear as claimed in any preceding claim characterised in that the holder is of glass or asbestos-filled polyimide.

5. A method of making an electrical sensor as claimed in any preceding claim, characterised in that the pins (5,8) are located in the holder body (1) and that the resistor material is subsequently moulded around at least part of the pins and to fill the U-shaped slot (2, 7).

6. A method of making an electrical sensor as claimed in any of claims 2 to 4, characterised in that the connecting wires (4) are attached to the pins (5) before the pins (5) are embedded in the resistor material.

FIG.1

FIG.3

FIG.2

FIG.4

## DOCUMENTS CONSIDERED TO BE RELEVANT

EP 82305401.0

| Category | Citation of document with indication, where appropriate, of relevant passages | Relevant to claim | CLASSIFICATION OF THE APPLICATION (Int. Cl. ³) |
|---|---|---|---|
| D,A | GB - A - 2 054 071 (FORD MOTOR COMPANY LIMITED) <br> * Totality * <br> -- | 1 | F 16 D 66/02 |
| A | GB - A - 1 433 315 (THE BENDIX CORPORATION) <br> * Claims 1-3; fig. 1 * <br> -- | 1 | |
| A | DE - A - 1 905 350 (TEXTAR GMBH) <br> * Claim 1 * <br> -- | 1 | |
| A | US - A - 3 556 258 (J.L. WINGE) <br> * Column 1, line 70 - column 4, line 65; fig. 1-5 * <br> -- | 1 | |
| A | DE - A1 - 2 610 903 (A. TEVES GMBH) <br> * Page 6, line 15 - page 9, line 19 fig. 1,2,4 * <br> -- | 1 | **TECHNICAL FIELDS SEARCHED (Int. Cl. ³)** <br> F 16 D 13/00 <br> F 16 D 66/00 <br> B 60 T 17/00 |
| A | GB - A - 2 015 099 (SUMITOMO ELECTRIC INDUSTRIES LTD.) <br> * Fig. 2,3 * <br> -- | 1 | |
| A | GB - A - 1 414 090 (S. JAYE) <br> * Claims 1,2; fig. 2 * <br> -- | | |

X The present search report has been drawn up for all claims

| Place of search | Date of completion of the search | Examiner |
|---|---|---|
| VIENNA | 18-01-1983 | ROUSSARIAN |

European Patent Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | GB - A - 2 036 210 (CIA-SHANG WONG) <br><br> * Page 1, column 2, line 74 - page 2, column 1, line 36; fig. 2 * <br><br> ---- | | |
| | | | TECHNICAL FIELDS SEARCHED (Int. Cl. 3) |